# EUROPEAN PATENT APPLICATION

(11) **EP 1 627 739 A2**
(43) Date of publication of application: **22.02.2006**
(21) Application number: 05255063.9
(22) Date of filing: 17.08.2005
(51) Int. Cl.: B41J 2/045, B41J 2/05, B41J 29/393

(54) **Method of determining a driving signal of an ink-jet printer head using an image forming device**

(30) Priority: 18.08.2004 KR 2004065036
(71) Applicant: Samsung Electronics Co., Ltd., Yeongtong-gu Suwon-si, Gyeonggi-do (KR)
(72) Inventor: Lee, Jung-hwa, Suwon-si Gyeonggi-do (KR)
(74) Representative: Waddington, Richard

(57) **Abstract**

A method of determining an optimal driving signal of a printer head using an image forming device. The method includes printing a test pattern using a plurality of driving signals having different driving voltage magnitudes and driving time spans, and determining a driving signal that prints the test pattern stably on a piece of paper as the optimal driving signal for the image forming device from among the plurality of driving signals. In the method of determining the optimal driving signal of the printer head using the image forming device, the test pattern is printed by changing the driving time spans and the driving voltage magnitudes of the plurality of driving signals used to drive a plurality of nozzles of the printer head and to readily determine the optimal driving signal for the printer head using the image forming device, without a need for an inkjet ejection system.

## Description

The present general inventive concept relates to a method of determining an optimal driving signal of an inkjet printer head using an image forming device.

An image forming device including an inkjet printer head has at least one printer head that ejects ink drops onto a piece of paper. Printing is performed when an energy pulse is applied to a driving component causing ink filled in an ink channel to be ejected through a nozzle of a nozzle plate disposed on an end of the ink channel.

Printer heads are manufactured through several processes. Accordingly, the printer heads have slightly different characteristics due to varying manufacturing tolerances. When printing is performed using an identical driving signal for the printer heads having different characteristics, in some cases, a lifetime of one of the printer heads may be reduced due to an excessive voltage applied thereto or poor quality printing can result from lack of ink ejection caused when the voltage applied is too small. Therefore, it is necessary to apply an appropriate driving signal suitable to each particular printer head.

A conventional method of determining a driving signal for a printer head comprises selecting a few printer heads having superior performance through a basic evaluation among manufactured printer heads, mounting the selected printer heads in an inkjet ejection system, observing an ejection state of the ink drops by changing a driving voltage and a driving time span of the driving signal, and determining an optimum driving signal by measuring ejection speed. Gradually increasing the driving voltage and the driving time span of the driving signal from a low voltage and a narrow time span is advantageous for stable driving of the printer head.

To meet user requirements for high speed and high quality printing, a number of driving elements in the printer head has gradually increased. Accordingly, in order to determine the optimum driving signal with respect to a printer head having many driving elements, the driving signal must be measured by changing the driving voltage and the driving time span of the driving signal with respect to each of the driving elements. If the ejection speed of ink drops is measured for only some of the driving elements, a measuring time can be reduced. However, a driving signal determined according to only some of the driving elements cannot be applied to all the driving elements due to varying manufacturing tolerances between the driving elements. On the other hand, if the ejection speeds of ink drops of all the driving elements are measured, a measuring time is long and an actual printing spot on a piece paper may be different from a calculated printing spot, since the ejection speed is calculated based on an assumption that the ink drops are ejected straight from the printer head.

Another drawback of the conventional method of determining the driving signal for a printer head exists in that the inkjet ejection system is required in order to determine the driving signal.

The present general inventive concept provides a method of determining a driving signal of a printer head using an image forming device that can readily determine an optimum driving signal without using an inkjet ejection system.

Additional aspects and advantages of the present general inventive concept will be set forth in part in the description which follows and, in part, will be obvious from the description, or may be learned by practice of the general inventive concept.

According to the present invention there is provided an apparatus and method as set forth in the appended claims. Preferred features of the invention will be apparent from the dependent claims, and the description which follows.

According to an aspect of the present invention there is provided a method of determining an optimal driving signal of a printer head using an image forming device, the method including printing a test pattern using a plurality of driving signals including a first through M^{th} driving signals having different driving voltage magnitudes and driving time spans, and determining a driving signal that prints the test pattern stably on a piece of paper as the optimal driving signal for the image forming device from among the plurality of driving signals.

For a better understanding of the invention, and to show how embodiments of the same may be carried into effect, reference will now be made, by way of example, to the accompanying diagrammatic drawings in which:
FIG. 1 is a flow chart illustrating a method of determining an optimal driving signal of a printer head using an image forming device according to an embodiment of the present general inventive concept;
FIG. 2 is a flow chart illustrating an operation 100 of the method of FIG. 1;
FIG. 3 illustrates an example of a test pattern printed on different printing lines of a piece of paper according to the method of FIG. 2;
FIG. 4 illustrates an example of a test pattern printed on the same printing lines of a piece of paper according to the method of FIG. 2; and
FIG. 5 illustrates a piece of paper on which fine lattices are drawn to determine a driving signal.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

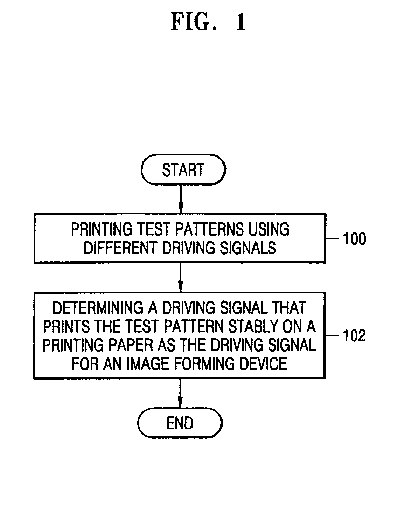

FIG. 1 is a flow chart illustrating a method of determining an optimal driving signal of a printer head using an image forming device according to an embodiment of the present general inventive concept. The flow chart includes operations 100 and 102 to determine the optimal driving signal that prints a stable test pattern.

In the operation 100, a test pattern is printed using a plurality of driving signals having different driving voltages and driving time spans.

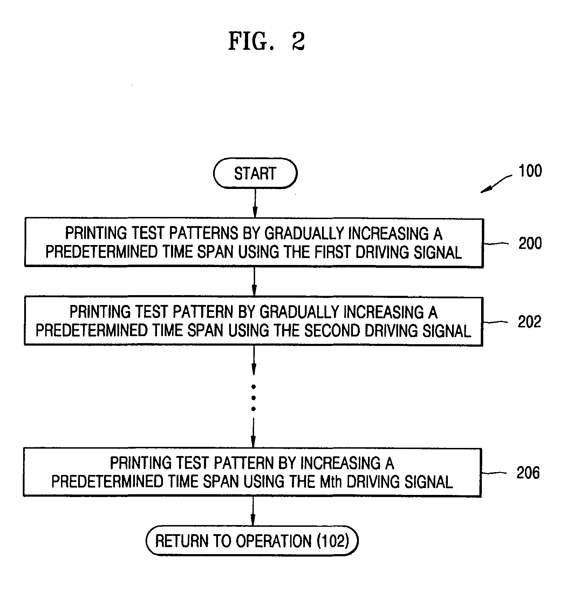

FIG. 2 is a flow chart illustrating the operation 100 of the method of FIG. 1 to print the test pattern using 1st through M^{th} driving signals (M is an integer greater than 2).

In an operation 200, the test pattern is printed by applying a first driving signal, having a first driving voltage and a first driving time span, to a driving element of the printer head. The first driving voltage may be an arbitrary voltage or a predetermined voltage applied to the driving element, and the first driving time span may be an arbitrary time span or a predetermined time span during which the driving element is driven by the first driving voltage. The test pattern is printed according to the first driving signal by applying the first driving voltage and gradually increasing the first driving time span.

The test pattern is repeatedly printed according to the first driving voltage and the increasing first driving time span until the test pattern is stably printed on a piece of paper. A state of the first driving signal when the test pattern is stably printed indicates a state when printing quality is maintained even if the first driving time span is further increased. Stable printing denotes a state when the test pattern is consistently printed at the same position on the piece of paper, indicating that an ejection speed of ink is maintained uniform by the optimal driving signal. As illustrated in FIG. 2, the driving time span can be varied for a plurality of driving signals including the first through Mth driving signal having corresponding driving voltages including the first driving voltage, a second driving voltage, ..., an Mth driving voltage to determine the optimal driving signal from among the plurality of corresponding driving voltages and the plurality of corresponding driving time spans.

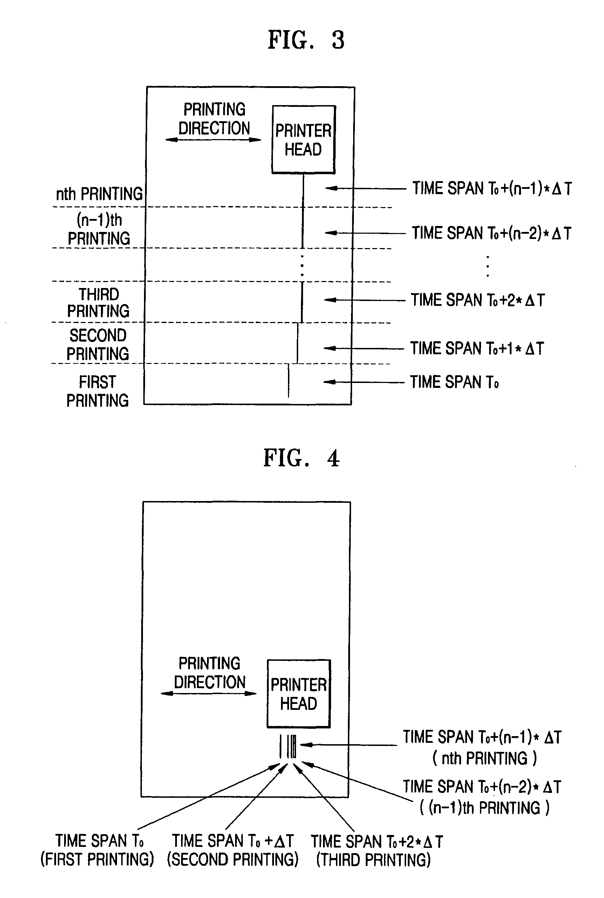

FIG. 3 illustrates an example of the test pattern printed on different printing lines of the piece of paper according to the method of FIG. 2. Referring to FIG. 3, the test pattern is obtained by applying the first driving signal having the first driving voltage and different driving time spans to the driving element of the printer head. That is, in a first printing, the test pattern is printed by applying the first driving voltage to the driving element for a driving time span To. After the first printing, the test pattern is printed in a second printing by applying the first driving voltage to the driving element and increasing the driving time span by ΔT. The driving time span is continuously increased by ΔT for each subsequent printing. Accordingly, the speed of ink droplets gradually increases and stable printing is performed consistently in the same position on the piece of paper when the speed of ink droplets remains constant, regardless of whether the driving time span is further increased. FIG. 3 illustrates that the test pattern is printed in the same position from a third printing to an nth printing. A minimum optimal driving time span is a minimum driving time span in which printing is determined to be stable. The minimum optimal driving time span is determined by printing the test pattern several times and gradually increasing the driving time span from To. In the example illustrated in FIG. 3, the minimum optimal driving time span is To + 2*ΔT, since the printing becomes stable when the driving time span is increased to To + 2*ΔT. Also as illustrated in FIG. 3, the printing remains stable even when the driving time span is increased in the subsequent printings. The optimal driving signal has a larger minimum optional driving time span than other driving signals. Additionally, the driving voltage that corresponds to the optimal driving signal provides stable printing over a large range of driving time spans.

FIG. 4 illustrates an example of the test pattern printed on the same printing lines of the piece of paper according to the method of FIG. 2. According to a shape of the test pattern, as illustrated in FIG. 3, the test pattern can be printed on different printing lines, or as illustrated in FIG. 4, the test pattern can be printed on the same printing lines. As illustrated in FIGS. 3 and 4, the test pattern may comprise one or more lines.

At operation 202 (see FIG. 2), the test pattern is printed using the second driving signal having a second driving voltage obtained by increasing the first driving voltage of the first driving signal and by gradually increasing a second driving time span during which the driving element is driven by the second driving voltage. The driving voltages of the driving signals are varied, because the printing stability can vary with the driving voltage. Accordingly, an optimal driving voltage can be determined.

When the test pattern is printed in the same position on the piece of paper in two consecutive printings, the stability of printing can be monitored by increasing the driving time span and printing the test pattern a few more times.

At operation 206, the test pattern is printed using a third driving signal through the M^{th} driving signal by increasing the driving voltage to a third driving voltage through an M^{th} driving voltage and gradually increasing a corresponding driving time span (i.e., a third driving time span through an M^{th} driving time span). The third driving voltage of the third driving signal is obtained by increasing the second driving voltage of the second driving signal, and the M^{th} driving voltage of the M^{th} driving signal can be obtained by increasing an (M-1)^{th} driving voltage of an (M-1)^{th} driving signal. The driving' element is driven at M driving voltages for a plurality of n different driving time spans to determine an optimal driving voltage and an optimal driving time span (i.e., the optimal driving signal). A predetermined number of printings M x n depend on a number of driving voltages M and a number of different driving time spans n.

Printing the test pattern for each of the corresponding M driving voltages is continued until the test pattern is printed on the same spot of the piece of paper by varying the corresponding driving time spans.

When the test pattern is printed on the same spot of the piece of paper, the test pattern is printed a few more times by increasing the corresponding driving time span to observe a marginal driving time span for stable printing.

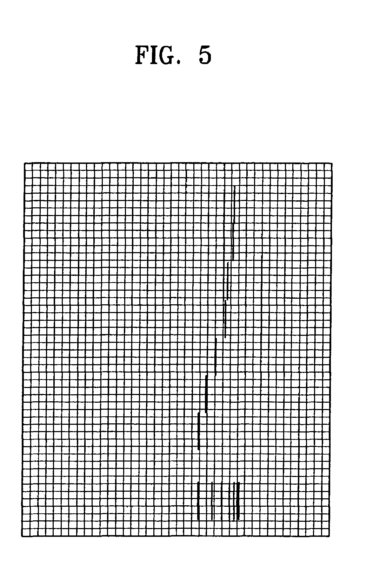

FIG. 5 illustrates an example of a piece of paper on which fine lattices are drawn to determine a driving signal.

When the test pattern is printed on this type of paper, printing stability can be readily distinguished. The fine lattices are used to determine positions of the test pattern printing according to the plurality of printings.

Referring back to FIG. 1, in the operation 102, a specific driving signal that prints the test pattern stably on the piece of paper is determined as the optimal driving signal for the image forming device.

Accordingly, in the operation 102, a specific driving signal having a corresponding driving voltage that maintains high quality of printing and printing stability over a relatively wide range of driving time spans among the printed test patterns is determined as the optimal driving signal for the image forming device. For example, as illustrated in FIG. 3 or 4, if the test pattern printed by the M^{th} driving signal has superior quality of printing and a larger marginal driving time span in which stable printing is maintained, the corresponding M^{th} driving voltage of the M^{th} driving signal is selected as the optimal driving voltage. In a test pattern printing using the M^{th} driving voltage, if the test pattern printing is performed stably with high quality from the (n-1)^{th} printing, the (n-1)^{th} driving time span plus a marginal driving time span is determined as an optimal driving time span of the M^{th} driving signal. The reason for adding the marginal time span to the (n-1)^{th} time span is to account for characteristic changes of all driving elements in a printer head. Conventionally, marginal driving time spans of 0.1-0.2 [µs] are added, but a marginal driving time span can be added according to the particular characteristics of the printer head.

The method of the present general inventive concept may be performed automatically by the image forming device for the particular printer head disposed in the image forming device or a separate detector, to detect the printed test pattern and determine one of the driving signals as the optimal driving signal according to the detected test pattern. Additionally, it should be understood that the present general inventive concept may be implemented in software, hardware, or a combination thereof. For example, the image forming device may include computer readable code to perform the plurality of printings of the test pattern and computer readable code to control a sensor to read the plurality of printings of the test pattern to determine the optimal driving signal. Furthermore, the method of the present general inventive concept may be performed when the image forming device is manufactured, when the image forming device is set-up/installed by a user, upon receiving a command from the user, or each time a new ink cartridge having a printer head is installed in the image forming device.

As described above, in a method of determining an optimal driving signal of a printer head using an image forming device according to the present general inventive concept, a test pattern is printed by changing driving time spans and driving voltage magnitudes of driving signals used to drive a plurality of nozzles of the printer head and to readily determine the optimal driving signal for the printer head using only the image forming device, without a need for an inkjet ejection system.

Additionally, a time during which to measure an ejection speed of the nozzles can be reduced compared to a conventional method in which the ejection speed of each nozzle is measured, since an average driving signal for all the nozzles can be detected.

Furthermore, a lifetime of the printer head can be increased, since printing is performed using the optimal driving signal suitable to a specific printer head.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of determining an optimal driving signal of a printer head using an image forming device, comprising:
printing a test pattern using a plurality of driving signals including a first through M^{th} driving signals having different driving voltage magnitudes and driving time spans; and
determining a driving signal that prints the test pattern stably on a piece paper as the optimal driving signal for the image forming device from among the plurality of driving signals.

2. The method of claim 1, wherein the printing of the test pattern comprises:
printing the test pattern using the first driving signal having a first driving voltage and a first driving time span by gradually increasing the first driving time span; and
printing the test pattern using a second driving signal having a second driving voltage obtained by increasing the first driving voltage of the first driving signal, and a second driving time span by gradually increasing the second driving time span,
wherein the printing of the test pattern using the plurality of driving signals are repeated a predetermined number of times by gradually increasing the corresponding driving voltage magnitude of the driving signals by a predetermined magnitude.

3. The method of claim 2, wherein the printing of the test pattern using the first through M^{th} driving signals having different driving voltage magnitudes and driving time spans comprises changing the corresponding driving voltage magnitude of the driving signal, changing the corresponding driving time span, and repeatedly printing the test pattern until the test pattern is stably printed on the piece of paper.

4. The method of any preceding claim, wherein the printing of the test pattern comprises repeatedly printing the test pattern on the same line of the piece of paper.

5. The method of any preceding claim, wherein the printing of the test pattern comprises repeatedly printing the test pattern on different lines of the piece of paper.

6. The method of any preceding claim, wherein the test pattern comprises an unstable test pattern print and a stable test pattern print, and the piece of paper on which the test pattern is printed includes fine lattices to distinguish the unstable test pattern print from the stable test pattern print.

7. The method of any preceding claim, wherein the determining of the driving signal comprises:
detecting a specific driving voltage of the corresponding driving signal when the test pattern is stably printed on the piece of paper;
detecting a specific driving time span of the corresponding driving signal when printing of the test pattern is performed with optimum quality by varying the driving time span of the specific driving voltage; and
determining both a marginal time span to add to the specific driving time span and the specific driving voltage as the optimal driving signal.

8. A method of determining an optimal driving signal specific to a printer head of an image forming apparatus, the method comprising:
printing a test pattern according to a plurality of sets of driving parameters applied to a driving element in the printer head; and
selecting a set of driving parameters at which the printing is stable, as an optimal set of driving parameters.

9. The method of claim 8, wherein:
the printing of the test pattern according to the plurality of sets of driving parameters comprises performing the plurality of printings according to one or more driving voltages and a plurality of driving time spans; and
the selecting of the set of driving parameters comprises selecting a driving voltage and a driving time span at which the printing is stable, as the optimal set of driving parameters.

10. The method of claim 9, wherein the selecting of the set of driving parameters at which the printing is stable as the optimal set of driving parameters comprises selecting a driving voltage over which an ink ejection speed from the printer head is consistent over a large range of driving time spans and selecting a driving time span within the large range of driving time spans.

11. The method of claim 9 or claim 10, wherein the printing is stable when the printer head consistently ejects ink to the same spot on a piece of paper.

12. The method of claim 9, 10 or 11, wherein the one or more driving voltages comprises a plurality of driving voltages, and the performing of the plurality of printings further comprises:
for each of the plurality of driving voltages, increasing a corresponding driving time span to determine a minimum optimal driving time span at which printing becomes stable.

13. The method of claim 12, wherein the printing further comprises:
for each of the plurality of driving voltages, increasing the corresponding driving time span a few more times after the minimum optimal driving time span is determined to determine a marginal driving time span.

14. The method of claim 13, wherein the selecting of the driving voltage and the driving time span at which the printing is stable as the optimal set of driving parameters comprises:
selecting a driving voltage having a largest marginal driving time span as an optimal driving voltage; and
selecting an optimal driving time span to be equal to a minimum optimal driving voltage at the optimal driving voltage plus the largest marginal driving time span.

15. The method of any one of claims 9 to 14, wherein the printing of the test pattern according to the plurality of sets of driving parameters further comprises:
determining an initial driving voltage and an initial driving time span;
printing the test pattern according to the initial driving voltage and the initial driving time span; and
incrementing the initial driving time span a plurality of times and printing the test pattern after each incrementation.

16. The method of claim 15, wherein the initial driving voltage and the initial driving time span are determined arbitrarily.

17. The method of claim 15 or claim 16, wherein the initial driving voltage and the initial driving time span are predetermined.

18. The method of any one of claims 15 to 17, wherein the printing of the test pattern according to the plurality of sets of driving parameters further comprises:
incrementing the initial driving voltage one or more times and incrementing the corresponding driving time span the plurality of times for each time the driving voltage is incremented; and
printing each time the corresponding driving voltage or the corresponding driving time span is incremented.

19. The method of any one of claims 15 to 18, wherein the printing of the test pattern according to the plurality of sets of driving parameters further comprises:
determining at least one subsequent driving voltage;
printing the test pattern according to the at least one subsequent voltage and the initial driving time span; and
incrementing the initial driving time span a plurality of times and printing the test pattern after each incrementation.

20. The method of claim 9, wherein the selecting of the driving voltage and the driving time span at which printing is stable as the optimal set of driving parameters comprises selecting one of the one or more driving voltages having a largest marginal driving time span.

21. The method of claim 20, wherein the marginal time span measures a range of driving time spans over which printing is stable at the corresponding driving voltage.

22. The method of claim 8, wherein the plurality of sets of driving parameters are used to drive a driving element selected from a plurality of driving elements in the printer head.

23. The method of claim 22, further comprising:
determining an optimal driving voltage for the selected driving element;
determining a minimum optimal driving time span and a marginal driving time span at the optimal driving voltage for the selected driving element; and
setting an optimal driving voltage for each of the plurality of driving elements to the optimal driving voltage of the selected driving element and setting an optimal driving time span for each of the plurality of driving elements to the minimum optimal driving time span plus the marginal driving time span.

24. A computer readable medium to control an image forming apparatus to determine an optimal driving signal specific to a printer head having a plurality of nozzles and a plurality of corresponding driving elements, the medium comprising:
first computer readable code to control the image forming apparatus to perform a plurality of printings of a test pattern according to a plurality of driving voltages and a plurality of driving time spans for each driving voltage; and
second computer readable code to control the image forming apparatus to determine the optimal driving signal to eject ink from the printer head from the plurality of driving voltages and the plurality of time spans according to the plurality of printings of the test pattern.

25. The medium of claim 24, wherein the plurality of driving voltages and the plurality of driving time spans are used to drive a driving element selected from the plurality of driving elements.

26. The medium of claim 25, further comprising:
third computer readable code to determine an optimal driving voltage for the selected driving element;
fourth computer readable code to determine a minimum optimal driving time span and a marginal driving time span at the optimal driving voltage for the selected driving element; and
fifth computer readable code to set an optimal driving voltage for each of the plurality of driving elements to the optimal driving voltage of the selected driving element and to set an optimal driving time span for each of the plurality of driving elements to the minimum optimal driving time span plus the marginal driving time span.

27. A computer readable medium to perform a method of determining an optimal driving signal of a printer head using an image forming device, the medium comprising:
first computer readable code to print a test pattern using a plurality of driving signals including a first through M^{th} driving signals having different driving voltage magnitudes and driving time spans; and
second computer readable code to determine a driving signal that prints the test pattern stably on a piece paper as the optimal driving signal for the image forming device from among the plurality of driving signals.

28. The medium of claim 27, wherein the first computer readable code to print the test pattern comprises:
third computer readable code to print the test pattern using the first driving signal having a first driving voltage and a first driving time span by gradually increasing the first driving time span; and
fourth computer readable code to print the test pattern using a second driving signal having a second driving voltage obtained by increasing the first driving voltage of the first driving signal, and a second driving time span by gradually increasing the second driving time span,
wherein the printing of the test pattern using the plurality of driving signals are repeated a predetermined number of times by gradually increasing the corresponding driving voltage magnitude of the driving signals by a predetermined magnitude.

29. The medium of claim 28, wherein the first computer readable code to print the test pattern using the first through M^{th} driving signals having different driving voltage magnitudes and driving time spans performs the printing by changing the predetermined magnitude of the corresponding driving voltage of the driving signal, changing the corresponding driving time span, and repeatedly printing the test pattern until the test pattern is stably printed on the piece of paper.

30. The medium of any one of claims 27 to 29, wherein the first computer readable code to print the test pattern comprises another computer readable code to repeatedly print the test pattern on the same line of the piece of paper.

31. The medium of any one of claims 27 to 30, wherein the first computer readable code to print the test pattern comprises another computer readable code to repeatedly print the test pattern on different lines of the piece of paper.

32. The medium of any one of claims 27 to 31, wherein the piece of paper on which the test pattern is printed includes fine lattices to distinguish an unstable test pattern print from a stable test pattern print.

33. The medium of any one of claims 27 to 32, wherein the second computer readable code to determine the driving signal comprises:
third computer readable code to detect a specific driving voltage of the corresponding driving signal when the test pattern is stably printed on the piece of paper;
fourth computer readable code to detect a specific driving time span of the corresponding driving signal when printing of the test pattern is performed with optimum quality by varying the driving time span of the specific driving voltage; and
fifth computer readable code to determine both a marginal time span to add to the specific driving time span and the specific driving voltage as the optimal driving signal.
